# EUROPEAN PATENT SPECIFICATION

(11) **EP 4 414 194 B1**
(45) Date of publication and mention of the grant of the patent: **09.12.2026**
(21) Application number: 23155246.4
(22) Date of filing: 07.02.2023
(51) Int. Cl.: B60K 1/00, B60K 11/02

(54) **COMPRESSED AIR DRIVEN EVAPORATIVE COOLING SYSTEM**
DRUCKLUFTBETRIEBENES VERDAMPFUNGSKÜHLSYSTEM
SYSTÈME DE REFROIDISSEMENT PAR ÉVAPORATION ACTIONNÉ PAR AIR COMPRIMÉ

(43) Date of publication of application: 14.08.2024
(73) Proprietor: VOLVO TRUCK CORPORATION, 405 08 Göteborg (SE)
(72) Inventor: Andersson, Arne, 435 42 Mölnlycke (SE)
(74) Representative: Valea AB

(56) References cited:
- EP-A1- 3 614 474
- EP-A2- 1 384 967
- DE-A1- 102020 201 046

## Description

### TECHNICAL FIELD

The disclosure relates generally to a compressed air driven evaporative cooling system. In particular aspects, the disclosure relates to a water spray cooling system for fuel cell electric vehicles.

The disclosure can be applied in any fuel cell electric vehicles, such as cars, heavy-duty trucks, buses, construction equipment, marine vessels etc. Although the disclosure will be described with respect to a particular vehicle, the disclosure is not restricted to any particular vehicles.

### BACKGROUND

A fuel cell is a device that can produce electricity by converting chemical energy from a fuel into electrical energy through an electrochemical reaction within a fuel cell stack, instead of converting the chemical energy from the fuel into heat through combustion. Fuel cells can produce electricity continuously as long as fuel and oxygen are supplied. Fuel cells may provide power for small electric/electronic products, industries, households, and vehicles. A fuel cell electric vehicle (FCEV) is an electric vehicle that uses a fuel cell, sometimes in combination with a small battery or supercapacitor, to power its onboard electric motor. Fuel cells in vehicles generate electricity generally using oxygen from the air and compressed hydroger Examples of water spray cooling systems are disclosed in prior art documents EP 3 614 474 A1, EP 1 384 967 A2, DE 10 2020 201046 A1.

Cooling of FCEVs is a huge challenge, usually an upsized cooling system with an extreme power fan is needed. A fan with extreme power creates noise and uses up some of the electricity generated by the fuel cell (FC) leaving less for propulsion and increasing cost. Further, the FC needs a special deionized coolant and bigger radiators need to be manufactured in a special material adding further cost to the cooling system.

### SUMMARY

The present disclosure provides a cooling system with reduced cost and size compared to the prior art solutions.

According to the invention, a water spray cooling system for a fuel cell electric vehicle is provided as defined in claim 1. The cooling system comprises a first storage container configured to store exhaust water generated from a fuel cell system comprised in the fuel cell electric vehicle and a second storage container connected to the first storage container via a first valve. The cooling system further comprises a first tube connecting a first opening of the second storage container with an air tank via a second valve. The air tank comprises compressed air generated from a compressed air system comprised in the fuel cell electric vehicle. The cooling system further comprises one or more water spray nozzles connected to a second opening of the second storage container through a second tube. The first and second valves are configured to be controlled during a water spray event such that the first valve is first open to fill water from the first storage container to the second storage container and then closed, and after the first valve is closed, the second valve is open to deliver the compressed air from the air tank to the second storage container to create a water spray at the water spray nozzle.

The water spray may be supplied to a radiator of the fuel cell system comprised in the fuel cell electric vehicle.

In some examples, the second storage container may be smaller than the first storage container and have a water volume needed for one water spray event.

According to some examples, the first and second storage containers are integrated as a two-chamber tank. A first chamber is the first storage container, a second chamber is the second storage container, and the first valve is a check valve and arranged between the two chambers.

According to some examples, the sizes of the second storage container, the second tube and the water spray nozzle, as well as the open time of the second valve are configured such that the compressed air presses out all water in the second storage container, the second tube and the water spray nozzle during one water spray event.

According to a second aspect of the disclosure, a fuel cell electric vehicle comprising the cooling system described above is provided.

According to a third aspect of the disclosure, a cooling method for a fuel cell electric vehicle is provided. The cooling method comprises providing a first storage container configured to store exhaust water generated from a fuel cell system comprised in the fuel cell electric vehicle; providing a second storage container connected to the first storage container via a first valve; providing a first tube connecting a first opening of the second storage container with an air tank via a second valve, wherein the air tank comprises compressed air generated from a compressed air system comprised in the fuel cell electric vehicle; providing one or more water spray nozzles connected to a second opening of the second storage container through a second tube; and controlling the first and second valves during a water spray event such that the first valve is first open to fill water from the first storage container to the second storage container and then closed, and after the first valve is closed, the second valve is open to deliver the compressed air from the air tank to the second storage container to create a water spray at the water spray nozzle.

According to some examples, the cooling method may further comprise controlling a third valve comprised in the second container to be open to the atmosphere during filling water from the first container to the second container.

The cooling system of the present disclosure uses the compressed air generated from the existing compressed air system comprised in the fuel cell electric vehicle to drive the water spray generation. The cooling water is the condensates generated from the fuel cell system. There is an exhaust tank for condensates on a vehicle using fuel cells, so the vehicle produces its own cooling water. The exhaust tank could be pressurized with the compressed air if it was equipped with check valves. By using the condensates generated from the fuel cells and the compressed air generated from the existing compressed air system in the vehicle, the cooling system of the present disclosure has technical benefits on e.g. reusing existing energy and system, reduced cost and size compared to the prior art solutions.

The above aspects, accompanying claims, and/or examples disclosed herein above and later below may be suitably combined with each other as would be apparent to anyone of ordinary skilled in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**Fig. 1** is a schematic block diagram showing an exemplary cooling system;
**Fig. 2** is a schematic block diagram showing another exemplary cooling system;
**Fig. 3** is a flow chart showing a cooling method for a fuel cell electric vehicle; and
**Fig. 4** is a schematic block diagram showing a FCEV.

### DETAILED DESCRIPTION

Aspects set forth below represent the necessary information to enable those skilled in the art to practice the disclosure.

Evaporative cooling is used in large scale in heat exchange facilities and has been proposed to be used also for cooling FCEVs. For example, for each kg of used hydrogen in the FC, 9 kg of water is produced so the FCEV produces its own cooling water. The FCEV exhaust is comparatively cold, so the exhaust cannot carry all of the water in gaseous form. The pressure to drive the water spray in different cooling applications is usually not very high, often in the range of 8-16 bar. FCEVs, e.g. vehicles with FCs, have a compressed air system or an air compressor so there are already 8-16 bar air pressure available on the vehicles. The primary function of the existing compressed air system in the vehicle is to supply compressed air for the vehicle air suspension and braking system.

The proposal in the present disclosure is to use the compressed air available on the fuel cell electric vehicle to drive the water spray generation. There is an exhaust tank for condensates on the fuel cell electric vehicle. The exhaust tank could be pressurized with the compressed air if it was equipped with check valves.

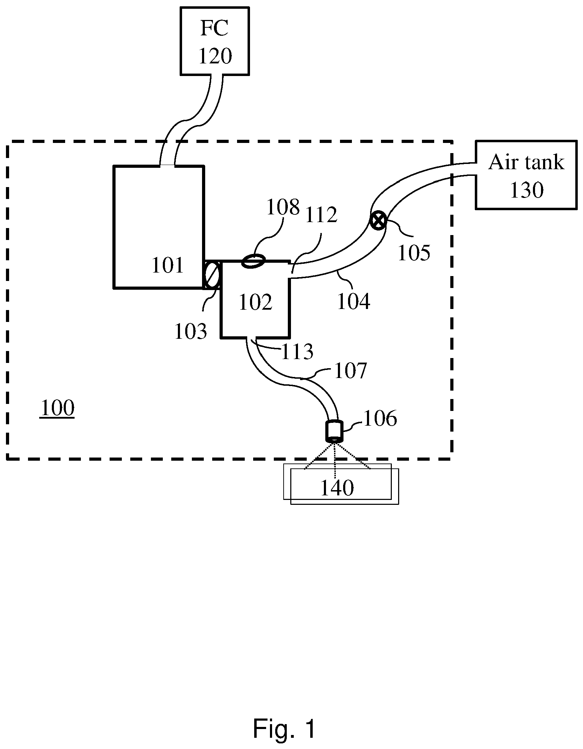

**Fig. 1** is a schematic block diagram showing an example of a water spray cooling system 100 for a fuel cell electric vehicle.

The cooling system 100 comprises a first storage container 101 configured to store exhaust water generated from a fuel cell system 120 comprised in the fuel cell electric vehicle.

The cooling system 100 further comprises a second storage container 102 connected to the first storage container 101 via a first valve 103.

The cooling system 100 further comprises a first tube 104 connecting a first opening 112 of the second storage container 102 with an air tank 130 via a second valve 105. The air tank 130 comprises compressed air generated from a compressed air system comprised in the fuel cell electric vehicle.

The cooling system 100 further comprises one or more water spray nozzles 106 connected to a second opening 113 of the second storage container 102 through a second tube 107.

The first and second valves 103, 105 are configured to be controlled during a water spray event. A water spray event may be defined as an event for generating a water spray from a received command to generate a water spray until the water spray is generated at the water spray nozzle 106. The first and second valves 103, 105 are configured to be controlled during a water spray event such that first valve 103 is open to fill water from the first storage container 101 to the second storage container 102 and then closed, and after the first valve 103 is closed, the second valve 105 is open to deliver the compressed air from the air tank 130 to the second storage container 102 to create a water spray at the water spray nozzle 106.

The water spray may be supplied to a radiator 140 of the fuel cell system comprised in the fuel cell electric vehicle. The water spray may also be supplied to other circuits or equipment for lowing their temperature e.g. air conditioning, electric motors and power electronics etc. comprised in the fuel cell electric vehicle.

The second storage container 102 is smaller than the first storage container 101 and has a water volume needed for generating one water spray event. The sizes of the second storage container 102, the second tube 107 and the water spray nozzle 106, as well as the open time of the second valve 105 are configured such that the compressed air presses out substantially all water in the second storage container 102, the second tube 107 and the water spray nozzle 106 during one water spray event.

The first valve 103 may be a check valve which does not need separate control. The check valve also called a one-way valve, is a device that allows the flow of fluids to move only in one direction. That is the first valve 103 allows the water flows from the first storage container 101 to the second storage container 102 and prevents the backflow from the second storage container 102 to the first storage container 101 when the second storage container 102 is pressurized.

The first valve 103 may also be any type of a control valve. The first valve 103 can be controlled to be open to fill the water from the first storage container 101 to the second storage container 102 and to be closed when the second storage container 102 is pressurized.

The second valve 105 may be any type of a control valve. The timing of opening or closing of the second valve 105 is important. The second valve 105 should be open long enough to blow out the water in the second container 102, in the second tube 107 and even more important the water in the water spray nozzle 106 to avoid potential freezing. If the second valve 105 is open for too long time, it will waste the compressed air which cost energy to compress. Typically, the second valve 105 may be closed before all water in the second container 102 is ejected. When most of the water has been pressed out from the second container 102, it is filled with high pressure air which is sufficient to blow out the water in the second tube 107 and nozzle 106. For example, assume that the second container 102 is pressurized with 8 bar air during a first half of the water spray event, the second container 102 is half filled with 8 bar air. Then the second valve 105 is closed, the air in the second container 102 continues to press the water out of the second container 102. When all water has been pressed out from the second container 102, the 8 bar air may have been dropped to 4 bar. So there are still a lot of air pressure left to drain the water in the second tube 107 and nozzle 106.

The second valve 105 may be controlled automatically by a signal from a controller. The opening or closing of the second valve 105 may be done by electrical, hydraulic or pneumatic actuators. Air-actuated valves are commonly used because of their simplicity, as they only require a compressed air supply, whereas electrically operated valves require additional cabling and switch gear, and hydraulically actuated valves required high pressure supply and return lines for the hydraulic fluid.

There may be a potential problem with water lock, i.e. if the compressed air does not blow the second tube 107 and the water spray nozzle 106 clean of water, there might be residual pressure in the second storage container 102 which may prevent the water filling from the first container 101 to the second container 102. To solve this potential problem, a third valve 108 may be implemented in the second container 102 opening to the atmosphere to get rid of a potential water lock. The third valve 108 may be controlled to be open to the atmosphere during filling water from the first container 101 to the second container 102.

The first, second and third valves 103, 105, 108 may be controlled by the existing control system comprised in the fuel cell electric vehicle by modifying the software or adding a separate control bord or circuits.

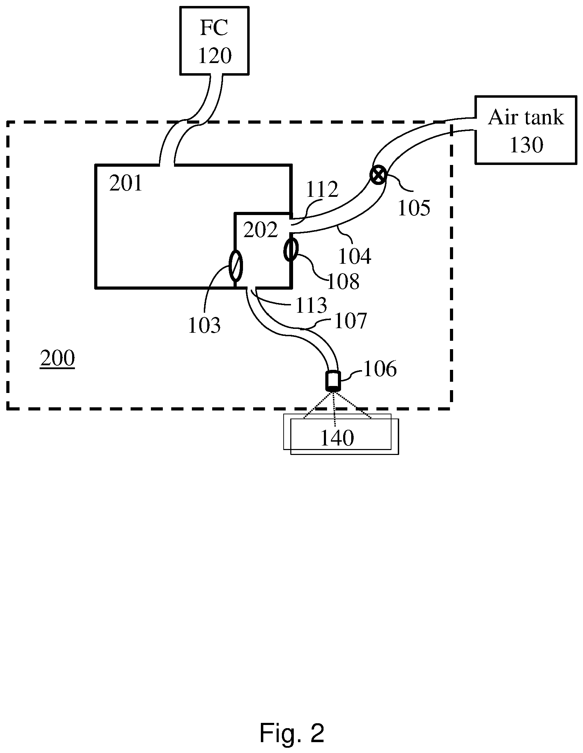

**Fig. 2** is a schematic block diagram showing another exemplary cooling system 200 for a fuel cell electric vehicle. As shown in Fig.2, the first and second storage containers 101, 102 may be integrated as a two-chamber condensate tank, a first chamber 201 and a second chamber 202. The first chamber 201 is the first storage container 101, the second chamber 202 is the second storage container 102, and the first valve 103 is arranged between the two chambers 201, 202.

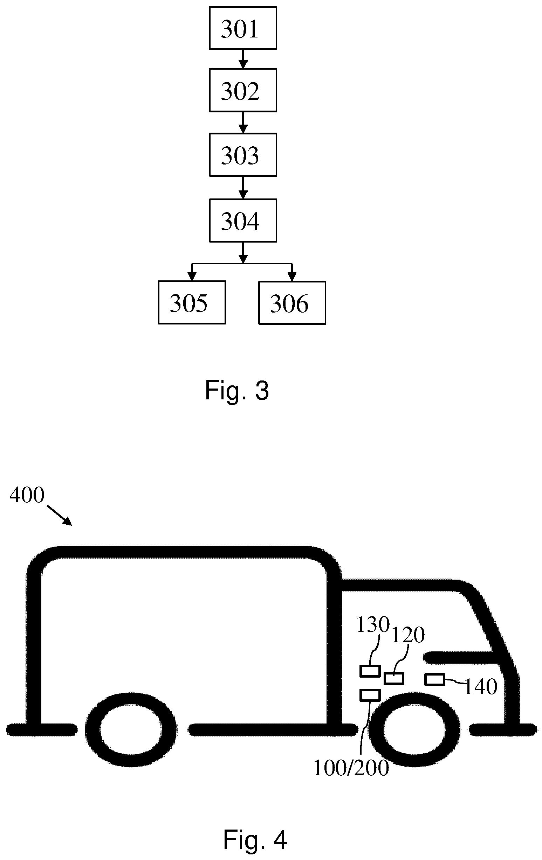

A cooling method for a fuel cell electric vehicle will be described with reference to **Fig. 3****.** The cooling method comprises the following steps, which may be performed in any suitable order.
**301:** Providing a first storage container 101 configured to store exhaust water generated from a fuel cell system 120 comprised in the fuel cell electric vehicle.
**302:** Providing a second storage container 102 connected to the first storage container 101 via a first valve 103.
**303:** Providing a first tube 104 connecting a first opening 112 of the second storage container 102 with an air tank 130 via a second valve 105, wherein the air tank 130 comprises compressed air generated from a compressed air system comprised in the fuel cell electric vehicle.
**304:** Providing one or more water spray nozzles 106 connected to a second opening 113 of the second storage container 102 through a second tube 107.
**305:** Controlling the first and second valves 103, 105 during a water spray event such that the first valve 103 is first open to fill water from the first storage container 101 to the second storage container 102 and then closed, and after the first valve 103 is closed, the second valve 105 is open to deliver the compressed air from the air tank 130 to the second storage container 102 to create a water spray at the water spray nozzle 106.

The cooling method may further comprise:
**306:** Controlling a third valve 108 comprised in the second container 102 to be open to the atmosphere during filling water from the first container 101 to the second container 102.

The cooling system 100, 200 and the cooling method described above may be implemented in any FCEVs. **Fig. 4** is a schematic block diagram showing a FCEV 400 comprising the cooling system 100, 200 described above. The cooling system 100, 200 can be applied in any type of FCEVs having air suspension system such as wagons, motor vehicles, cars, trucks, buses, railed vehicles e.g. trains, trams, watercraft e.g. ships, boats, amphibious vehicles e.g. screw-propelled vehicle, hovercraft, aircraft e.g. airplanes, helicopters, aerostat and spacecraft etc.

It is notated that Fig.1 and 2 are only for illustration purpose. The positions and shapes of the first and second containers 101, 102 and the positions and shapes of the first, second and third valves 103, 105, 108 may vary depending on the actual application, situation, structure, and environment in the FCEVs.

To summarize, the cooling system 100, 200 of the present disclosure uses the compressed air generated from the existing compressed air system comprised in the fuel cell electric vehicle to drive the water spray generation. The cooling water is the condensates generated from the fuel cell system comprised in the fuel cell electric vehicle. By using the condensates generated from the fuel cells and the compressed air generated from the existing compressed air system in the fuel cell electric vehicle, existing energy and system are reused and a cooling system with reduced cost and size compared to the prior art solutions is provided.

Some examples are listed in the following:
**Example 1:** A water spray cooling system (100, 200) for a fuel cell electric vehicle (400), wherein the cooling system (100, 200) comprises:
   a first storage container (101) configured to store exhaust water generated from a fuel cell system (120) comprised in the fuel cell electric vehicle (400);
   a second storage container (102) connected to the first storage container (101) via a first valve (103);
   a first tube (104) connecting a first opening (112) of the second storage container (102) with an air tank (130) via a second valve (105), wherein the air tank (130) comprises compressed air generated from a compressed air system comprised in the fuel cell electric vehicle (400); and
   one or more water spray nozzles (106) connected to a second opening (113) of the second storage container (102) through a second tube (107); and wherein
   the first and second valves (103, 105) are configured to be controlled during a water spray event such that the first valve (103) is first open to fill water from the first storage container (101) to the second storage container (102) and then closed, and after the first valve (103) is closed, the second valve (105) is open to deliver the compressed air from the air tank (130) to the second storage container (102) to create a water spray at the water spray nozzle (106).
**Example 2:** The cooling system (100, 200) according to Example 1, wherein the water spray is supplied to a radiator (140) of the fuel cell system comprised in the fuel cell electric vehicle (400).
**Example 3:** The cooling system (100, 200) according to any one of Examples 1-2, wherein the second storage container (102) is smaller than the first storage container (101) and has a water volume needed for one water spray event.
**Example 4:** The cooling system (100, 200) according to any one of Examples 1-3, wherein the first and second storage containers (101, 102) are integrated as a two-chamber (201, 202) tank, and wherein a first chamber (201) is the first storage container (101), a second chamber (202) is the second storage container (102), and the first valve (103) is arranged between the two chambers (201, 202).
**Example 5:** The cooling system (100, 200) according to any one of Examples 1-4, wherein the first valve (103) is a check valve.
**Example 6:** The cooling system (100, 200) according to any one of Examples 1-5, wherein the sizes of the second storage container (102), the second tube (107) and the water spray nozzle (106), as well as the open time of the second valve (105) are configured such that the compressed air presses out substantially all water in the second storage container (102), the second tube (107) and the water spray nozzle (106) during one water spray event.
**Example 7:** The cooling system (100, 200) according to any one of Examples 1-6 further comprising a third valve (108) comprised in the second container (102), wherein the third valve (108) is controlled to be open to the atmosphere during filling water from the first container (101) to the second container (102).
**Example 8:** A fuel cell electric vehicle (400) comprising a cooling system (100, 200) according to any one of Examples 1-7.
**Example 9:** A cooling method for a fuel cell electric vehicle (400) comprising:
   providing (301) a first storage container (101) configured to store exhaust water generated from a fuel cell system (120) comprised in the fuel cell electric vehicle (400);
   providing (302) a second storage container (102) connected to the first storage container (101) via a first valve (103);
   providing (303) a first tube (104) connecting a first opening (112) of the second storage container (102) with an air tank (130) via a second valve (105), wherein the air tank (130) comprises compressed air generated from a compressed air system comprised in the fuel cell electric vehicle (400);
   providing (304) one or more water spray nozzles (106) connected to a second opening (113) of the second storage container (102) through a second tube (107);
   controlling (305) the first and second valves (103, 105) during a water spray event such that the first valve (103) is first open to fill water from the first storage container (101) to the second storage container (102) and then closed, and after the first valve (103) is closed, the second valve (105) is open to deliver the compressed air from the air tank (130) to the second storage container (102) to create a water spray at the water spray nozzle (106).
**Example 10:** The cooling method according to Example 9, further comprises:
   controlling (306) a third valve (108) comprised in the second container (102) to be open to the atmosphere during filling water from the first container (101) to the second container (102).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure, which is defined by the appended claims. In the drawings and specification, there have been disclosed aspects for purposes of illustration only and not for purposes of limitation, the scope of the inventive concepts being set forth in the following claims.

## Claims

1. A water spray cooling system (100, 200) for a fuel cell electric vehicle (300),
wherein the cooling system (100, 200) comprises:
a first storage container (101) configured to store exhaust water generated from a fuel cell system (120) comprised in the fuel cell electric vehicle (300);
**characterized in that** the cooling system (100, 200) further comprises:
a second storage container (102) connected to the first storage container (101) via a first valve (103);
a first tube (104) connecting a first opening (112) of the second storage container (102) with an air tank (130) via a second valve (105), wherein the air tank (130) contains compressed air generated from a compressed air system comprised in the fuel cell electric vehicle (300); and
one or more water spray nozzles (106) connected to a second opening (113) of the second storage container (102) through a second tube (107); and wherein
the first and second valves (103, 105) are controlled during a water spray event such that the first valve (103) is first open to fill water from the first storage container (101) to the second storage container (102) and then closed, and after the first valve (103) is closed, the second valve (105) is open to deliver the compressed air from the air tank (130) to the second storage container (102) to create a water spray at the water spray nozzle (106).

2. The cooling system (100, 200) according to claim 1, wherein the water spray is supplied to a radiator (140) of the fuel cell system comprised in the fuel cell electric vehicle (300).

3. The cooling system (100, 200) according to any one of claims 1-2, wherein the second storage container (102) is smaller than the first storage container (101) and has a water volume needed for one water spray event.

4. The cooling system (100, 200) according to any one of claims 1-3, wherein the first and second storage containers (101, 102) are integrated as a two-chamber (201, 202) tank, and wherein a first chamber (201) is the first storage container (101), a second chamber (202) is the second storage container (102), and the first valve (103) is arranged between the two chambers (201, 202).

5. The cooling system (100, 200) according to any one of claims 1-4, wherein the first valve (103) is a check valve.

6. The cooling system (100, 200) according to any one of claims 1-5, wherein the sizes of the second storage container (102), the second tube (107) and the water spray nozzle (106), as well as the open time of the second valve (105) are configured such that the compressed air presses out all water in the second storage container (102), the second tube (107) and the water spray nozzle (106) during one water spray event.

7. The cooling system (100, 200) according to any one of claims 1-6 further comprising a third valve (108) comprised in the second container (102), wherein the a third valve (108) is controlled to be open to the atmosphere during filling water from the first container (101) to the second container (102).

8. A fuel cell electric vehicle (300) comprising a cooling system (100, 200) according to any one of claims 1-7.

## Patentansprüche

1. Wassersprühkühlsystem (100, 200) für ein Brennstoffzellen-Elektrofahrzeug (300), wobei das Kühlsystem (100, 200) umfasst:
einen ersten Speicherbehälter (101), der konfiguriert ist, um Abwasser zu speichern, das von einem Brennstoffzellensystem (120), das in dem Brennstoffzellen-Elektrofahrzeug (300) enthalten ist, generiert wird;
**dadurch gekennzeichnet, dass** das Kühlsystem (100, 200) ferner umfasst:
einen zweiten Speicherbehälter (102), der mit dem ersten Speicherbehälter (101) über ein erstes Ventil (103) verbunden ist;
ein erstes Rohr (104), das eine erste Öffnung (112) des zweiten Speicherbehälters (102) mit einem Lufttank (130) über ein zweites Ventil (105) verbindet, wobei der Lufttank (130) Druckluft enthält, die von einem Druckluftsystem generiert wird, das in dem Brennstoffzellen-Elektrofahrzeug (300) enthalten ist; und
eine oder mehrere Wassersprühdüsen (106), die mit einer zweiten Öffnung (113) des zweiten Vorratsbehälters (102) durch ein zweites Rohr (107) verbunden sind; und wobei
das erste und das zweite Ventil (103, 105) während eines Wassersprühvorgangs derart gesteuert werden, dass das erste Ventil (103) zuerst geöffnet wird, um Wasser aus dem ersten Speicherbehälter (101) in den zweiten Speicherbehälter (102) zu füllen, und dann geschlossen wird, und nachdem das erste Ventil (103) geschlossen ist, das zweite Ventil (105) geöffnet wird, um die Druckluft aus dem Lufttank (130) an den zweiten Speicherbehälter (102) abzugeben, um eine Wassersprühung an der Wassersprühdüse (106) zu erzeugen.

2. Kühlsystem (100, 200) nach Anspruch 1, wobei die Wassersprühung einem Kühler (140) des Brennstoffzellensystems, das in dem Brennstoffzellen-Elektrofahrzeug (300) enthalten ist, zugeführt wird.

3. Kühlsystem (100, 200) nach einem der Ansprüche 1 bis 2, wobei der zweite Speicherbehälter (102) kleiner als der erste Speicherbehälter (101) ist und ein Wasservolumen aufweist, das für einen Wassersprühvorgang benötigt wird.

4. Kühlsystem (100, 200) nach einem der Ansprüche 1 bis 3, wobei der erste und der zweite Speicherbehälter (101, 102) als ein Zweikammertank (201, 202) integriert sind, und wobei eine erste Kammer (201) der erste Speicherbehälter (101) ist, eine zweite Kammer (202) der zweite Speicherbehälter (102) ist und das erste Ventil (103) zwischen den zwei Kammern (201, 202) angeordnet ist.

5. Kühlsystem (100, 200) nach einem der Ansprüche 1 bis 4, wobei das erste Ventil (103) ein Rückschlagventil ist.

6. Kühlsystem (100, 200) nach einem der Ansprüche 1 bis 5, wobei die Größen des zweiten Speicherbehälters (102), des zweiten Rohrs (107) und der Wassersprühdüse (106) sowie die Öffnungszeit des zweiten Ventils (105) derart konfiguriert sind, dass die Druckluft das gesamte Wasser in dem zweiten Speicherbehälter (102), dem zweiten Rohr (107) und der Wassersprühdüse (106) während eines Wassersprühvorgangs herausdrückt.

7. Kühlsystem (100, 200) nach einem der Ansprüche 1 bis 6, ferner umfassend ein drittes Ventil (108), das in dem zweiten Behälter (102) enthalten ist, wobei das dritte Ventil (108) derart gesteuert wird, dass es zu der Atmosphäre hin während des Füllens von Wasser aus dem ersten Behälter (101) in den zweiten Behälter (102) offen ist.

8. Brennstoffzellen-Elektrofahrzeug (300), umfassend ein Kühlsystem (100, 200) nach einem der Ansprüche 1 bis 7.

## Revendications

1. Système de refroidissement par pulvérisation d'eau (100, 200) pour un véhicule électrique à pile à combustible (300), dans lequel le système de refroidissement (100, 200) comprend :
un premier récipient (101) de stockage conçu pour stocker l'eau d'échappement générée par un système de pile à combustible (120) compris dans le véhicule électrique à pile à combustible (300) ;
**caractérisé en ce que** le système de refroidissement (100, 200) comprend en outre :
un second récipient (102) de stockage relié au premier récipient (101) de stockage par l'intermédiaire d'une première vanne (103) ;
un premier tube (104) reliant une première ouverture (112) du second récipient (102) de stockage à un réservoir d'air (130) par l'intermédiaire d'une deuxième vanne (105), dans lequel le réservoir d'air (130) contient de l'air comprimé généré à partir d'un système d'air comprimé compris dans le véhicule électrique à pile à combustible (300) ; et
une ou plusieurs buses de pulvérisation d'eau (106) reliées à une seconde ouverture (113) du second récipient (102) de stockage par un second tube (107) ; et dans lequel
les première et deuxième vannes (103, 105) sont commandées lors d'un événement de pulvérisation d'eau de telle sorte que la première vanne (103) est d'abord ouverte pour remplir l'eau du premier récipient (101) de stockage dans le second récipient (102) de stockage puis fermée, et après que la première vanne (103) est fermée, la deuxième vanne (105) est ouverte pour distribuer l'air comprimé du réservoir d'air (130) au second récipient (102) de stockage pour créer une pulvérisation d'eau au niveau de la buse de pulvérisation d'eau (106).

2. Système de refroidissement (100, 200) selon la revendication 1, dans lequel la pulvérisation d'eau est fournie à un radiateur (140) du système de pile à combustible compris dans le véhicule électrique à pile à combustible (300).

3. Système de refroidissement (100, 200) selon l'une quelconque des revendications 1 à 2, dans lequel le second récipient (102) de stockage est plus petit que le premier récipient (101) de stockage et a un volume d'eau nécessaire pour un événement de pulvérisation d'eau.

4. Système de refroidissement (100, 200) selon l'une quelconque des revendications 1 à 3, dans lequel les premier et second récipients (101, 102) de stockage sont intégrés sous la forme d'un réservoir à deux chambres (201, 202), et dans lequel une première chambre (201) est le premier récipient (101) de stockage, une seconde chambre (202) est le second récipient (102) de stockage, et la première vanne (103) est agencée entre les deux chambres (201, 202).

5. Système de refroidissement (100, 200) selon l'une quelconque des revendications 1 à 4, dans lequel la première vanne (103) est une vanne de non-retour.

6. Système de refroidissement (100, 200) selon l'une quelconque des revendications 1 à 5, dans lequel les tailles du second récipient (102) de stockage, du second tube (107) et de la buse de pulvérisation d'eau (106), ainsi que le temps d'ouverture de la deuxième vanne (105) sont conçus de telle sorte que l'air comprimé expulse toute l'eau dans le second récipient (102) de stockage, le second tube (107) et la buse de pulvérisation d'eau (106) lors d'un événement de pulvérisation d'eau.

7. Système de refroidissement (100, 200) selon l'une quelconque des revendications 1 à 6, comprenant en outre une troisième vanne (108) comprise dans le second récipient (102), dans lequel la troisième vanne (108) est commandée pour être ouverte à l'atmosphère pendant le remplissage d'eau du premier récipient (101) vers le second récipient (102).

8. Véhicule électrique à pile à combustible (300) comprenant un système de refroidissement (100, 200) selon l'une quelconque des revendications 1 à 7.
